# EUROPEAN PATENT SPECIFICATION

(11) **EP 2 966 973 B1**
(45) Date of publication and mention of the grant of the patent: **27.02.2019**
(21) Application number: 14770063.7
(22) Date of filing: 14.03.2014
(51) Int. Cl.: A23B 9/18, A23B 9/22

(54) **IMPROVED METHODS FOR TREATING GRAIN WITH OZONE**
VERBESSERTE VERFAHREN ZUR BEHANDLUNG VON KORN MIT OZON
PROCÉDÉS AMÉLIORÉS DE TRAITEMENT DE GRAIN AVEC DE L'OZONE

(30) Priority: 15.03.2013 US 201361792421 P
(43) Date of publication of application: 20.01.2016
(73) Proprietor: Archer-Daniels-Midland Company, Decatur, IL 62526 (US)
(72) Inventor: JOHNSON, Kevin C., Pocatello, Idaho 83204 (US); GOWER, William E., Pocatello, Idaho 83204 (US)
(74) Representative: dompatent von Kreisler Selting Werner - Partnerschaft von Patent- und Rechtsanwälten mbB
(86) International application number: PCT/US2014/027030
(87) International publication number: WO 2014/152169

(56) References cited:
- US-A1- 2005 112 209
- US-A1- 2009 094 853
- US-A1- 2009 117 016
- US-A1- 2011 151 073
- US-A1- 2011 151 080

## Description

### CROSS-REFERENCE TO RELATED APPLICATIONS

This application claims priority to US Provisional Patent Application 61/792,421 filed March 15, 2013.

### TECHNICAL FIELD

The present relates generally to grain treatment, and more particularly to treating grain with ozone.

### BACKGROUND OF THE INVENTION

Ozone can be used to treat grain for various things such as insects, mold, bacteria, unwanted odors, and/or toxins. The ozone can be introduced into a grain bin or other grain storage container in order to treat the grain being stored.

However, due to the size of the grain bin or other storage container, being able to evenly treat all of the grain in the bin or other storage container can be a challenge. Further, passing ozone through a pile of grain and reaching all of the grain can be difficult since the ozone many "channel" through various parts of the grain pile and heavily treat some areas of the grain pile, while not reaching other parts of the grain pile. Thus, needs exist for more efficient methods of treating grain with ozone.
US 2011/015073 discloses systems and methods for treating grain stored in a grain pile with ozone for treatment against toxins, insects, mold and/or odor.

### SUMMARY OF THE INVENTION

In each of its various embodiments, the present invention solves these challenges and discloses improved methods of treating grain with ozone.

The present invention relates to a method of treating grain with ozone, the method comprising:
introducing ozone in a headspace above the grain in a first location;
drawing the ozone into the grain with at least two fans until the ozone is detected in air drawn through a first fan of the at least two fans;
once the ozone is detected in the air drawn through the first fan, reducing a flow of air generated by the first fan; and
continuing to draw the ozone into the grain with the remaining fans of the at least two fans;
wherein, after a first period of time of introducing the ozone in the first location, further comprises:
introducing the ozone in the headspace above the grain in a second location;
   drawing the ozone into the grain with the at least two fans until the ozone is detected in air drawn through the first fan of the at least two fans;
   once the ozone is detected in the air drawn through the first fan, reducing a flow of air generated by the first fan; and
   continuing to draw the ozone into the grain with the remaining fans of the at least two fans. Preferred embodiments are evident from the subject-matter of the dependent claims.

In another aspect of the present disclosure, a method of treating grain with ozone comprises introducing ozone in a headspace above the grain in a first location, drawing the ozone into the grain with at least two fans until the ozone is detected in air drawn through the grain with one fan of the at least two fans, and once the ozone is detected in the air drawn through the grain with the one fan, the ozone is introduced into the headspace at a second location.

In yet a further aspect of the present disclosure, a method of treating grain with ozone comprises placing grain in a bin having an aeration floor, at least two fans associated with the aeration floor, and at least two vents. The ozone is introduced into a headspace above the grain in the bin through a first vent, the ozone is drawn through the grain with the at least two fans, and exhaust from the at least two fans is monitored for the ozone. Once the ozone is detected coming out of a first of the at least two fans, a flow of the first fan is reduced.

In an additional aspect of the present disclosure, a method of treating grain with ozone includes introducing ozone in a headspace above the grain in a first location, drawing the ozone into the grain until the ozone is detected in an exhaust of air drawn through the grain, and once the ozone is detected in the exhaust of air drawn through the grain, the ozone is introduced into the headspace at a second location.

### DESCRIPTION OF THE DRAWINGS

FIGS. 1A and 1B illustrate an embodiment of a grain storage container used for one embodiment of a method of treating grain with ozone of the present invention.

FIGS. 2A and 2B illustrate one embodiment of a grain storage container used for an embodiment of a method of treating grain with ozone of the present invention.

### DETAILED DESCRIPTION OF THE INVENTION

Work on treating grain with ozone has continued. The following patent applications are assigned to the assignee of the present invention and describe general methods and conditions for treating grain with ozone. US Patent Application Publication 2011/0151079, describes a continuous treatment of grain with ozone, US Patent Application Publication 2011/0151080, describes downdraft methods of treating grain with ozone, and US Patent Application Publication 2011/0151073, describes treating grain with ozone in grain piles.

Grains which may be treated according to the methods of the present invention include, but are not limited to, any agricultural commodity that is typically stored in piles or in bins such as wheat, corn, soybeans, barley, oats, rye, rice, millet, sorghum, edible beans, sunflowers, canola, triticale, quinoa, or other grains.

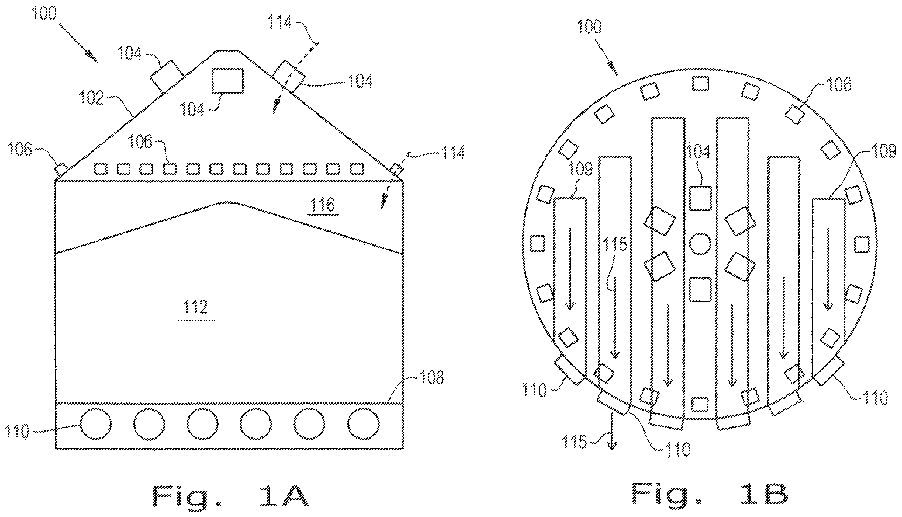

One aspect of treating grain with ozone includes placing the grain in a container, such as a grain bin 100 shown in FIG. 1A. This aspect is directed towards a grain bin that holds about one million bushels, has about 39.93 m (131 foot) diameter, and includes 6 fans. However, it will be appreciated by those of ordinary skill in the art that other sizes of grain bins may be treated with the methods of the present invention and is applicable to treat grains bins having two or more fans. The side view of the grain bin 100 shows a roof 102 including exhaust vents 104 and J-vents 106. Also shown is a floor 108. In this aspect, the floor 108 comprises a number of aeration panels 109 (shown in FIG. 1B) making the floor 108 a functioning aeration floor. Each of the aeration panels 109 is operatively connected to air conduit (not shown) which in turn are operatively connected to a number of fans 110. Within the grain bin 100 is a pile of grain 112.

In this aspect, the grain 112 is placed in the grain bin 100 as known by those of ordinary skill in the art. The grain 112 is placed on the floor 108 having the aeration panels 109 such that during the time the grain 112 is located within the grain bin 100, air may be drawn in the grain bin 100 through the exhaust vents 104 and/or the J-vents 106 as indicated by arrows 114 into a headspace 116 of air above the grain 112 within the grain bin 100. The air is drawn into the grain bin 100 by turning on the fans 110 which suck air from the grain 112 and the headspace 116. In essence, the fans 110 create a negative pressure under the floor 108 of the grain 112 that draws the air from the headspace 116 into the grain 112, and in turn the movement of the air from the headspace 116 into the grain draws in the air through the exhaust vents 104 and/or J-vents 106 into the headspace 116.

FIG. 1B is a top view of the grain bin 100 of FIG. 1A, without having any grain 112. In this view, there are six aeration panels 109 located on the floor 108. The arrows 115 show the direction of air being sucked out of the grain bin 100 through the aeration panels 109 and out of the grain bin 100 via the fans 110.

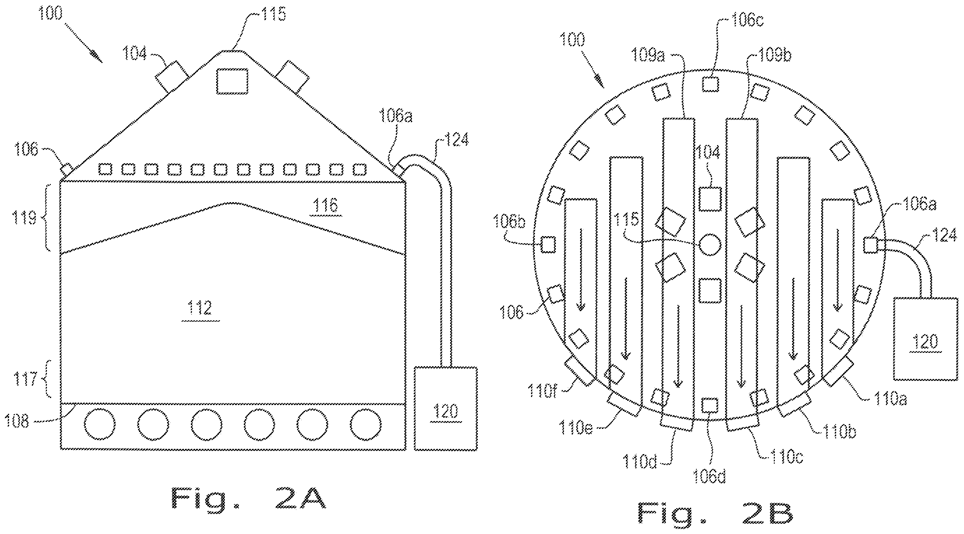

Treatment of the grain 112 in the grain bin 100 will be described in reference to FIGS. 2A and 2B. An ozone generator 120 is operatively connected to one of the J-vents 106a by ozone conduit 124. In this manner, ozone is pumped into the headspace 116 of the grain bin 100 through one of the J-vents 106a. One or more of the exhaust vents 104 may be sealed or plugged such that during treatment of the grain 112 within the grain bin 100, air from outside cannot enter the grain bin 100 through the exhaust vents 104 or if not all of the exhaust vents 104 are sealed or plugged, the amount of air entering the grain bin 100 from outside is reduced. In a further aspect, one or more or all of the J-vents 106 that are not connected to the ozone conduit 124 may also be closed or sealed such that only air or ozone or a reduced amount of air can enter the grain bin 100 through the J-vent 106a connected to the ozone conduit 124.

The grain 112 is treated by generating and pumping ozone into the headspace 116 of the grain bin 100. The fans 110 are turned on to draw or suck the ozone pumped into the headspace 116 into the grain 112. As the fans 110 are running and the ozone is pumped through the J-vent 106a, the ozone begins traveling through the grain 112 and exerting its treatment effect on the grain 112. After a period of time, the air exiting the grain bin 100 through the fans 110 is monitored using an ozone detecting device or detected (such as by smelling the ozone) by a person. Once the ozone is detected as exiting the grain bin 100 through one of the fans 110 (i.e., through fan 110a or fan 110b) (such as a time of about 18-24 hours), the fan 110a or 110b (which may be located in closest proximity to the J-vent 106a operatively connected to the ozone generator 120) through which the ozone is first detected is turned off or has its air flow reduced, such that the air begins to exit the grain bin 100 more through the other fans 106.

Once fan 110a or 110b is turned off or has its air flow reduced, then a different fan 110 (i.e., fan 110a or 110b) is allowed to run until ozone is detected as exiting the grain bin 100 through that fan 110a or 110b (such as a time of about 18-24 hours). Once the second fan 110a or 110b is turned off, the remaining fans 110c-f are allowed to run for a period of time, such as a time of about 3-5 days. After such period of time, the ozone conduit 124 is removed from the J-vent 106a and attached to a different J-vent 106b.

After attaching the ozone conduit 124 to the J-vent 106b, all of the fans 110 are turned on to draw or suck the ozone pumped into the headspace 116 into the grain 112. As the fans 110 are running and the ozone is pumped through the J-vent 106b, the ozone begins traveling through the grain 112 and exerting its treatment effect on the grain 112. After a period of time, the air exiting the grain bin 100 through the fans 110 is monitored using an ozone detecting device or detected by a person. Once ozone is detected as exiting the grain bin 100 through one of the fans 110 (i.e., fan 110f or fan 110e) (such as a time of about 18-24 hours), the fan 110f or 110e (the fans which may be located in closest proximity to the J-vent 106b operatively connected to the ozone generator 120) through which the ozone is first detected is turned off or has its air flow reduced, such that the air begins to exit the grain bin 100 more through one or more of the other fans 110.

Once fan 110f or 110e is turned off, then the other fan 110f or 110e is allowed to run until ozone is detected as exiting the grain bin 100 through that fan 110f or 110e (such as a time of about 18-24 hours). Once the second fan 110f or 110e is turned off, the remaining fans 110a-d are allowed to run for a period of time, such as a time of about 3-5 days. After such period of time, the ozone conduit 124 is removed from the J-vent 106b and attached to a different J-vent 106c.

After attaching the ozone conduit 124 to the J-vent 106c, all of the fans 110 are turned on to draw or suck the ozone pumped into the headspace 116 into the grain 112. As the fans 110 are running and the ozone is pumped through the J-vent 106c, the ozone begins traveling through the grain 112 and exerting its treatment effect on the grain 112. After a period of time, the air exiting the grain bin 100 through the fans 110 is monitored using an ozone detecting device or detected by a person. Once ozone is detected as exiting the grain bin 100 through fan 110d or fan 110c (such as a time of about 18-24 hours), the fan 110d or 110c (associated with the aeration panels 109a or 109b located in closest proximity to the J-vent 106c operatively connected to the ozone generator 120) is turned off or has its air flow reduced, such that the air begins to exit the grain bin 100 more through the other fans 110.

Once fan 110d or 110c is turned off, then the other fan 110d or 110c is allowed to run until ozone is detected as exiting the grain bin 100 through that fan 110d or 110c (such as a time of about 18-24 hours). Once the second fan 110d or 110c is turned off or is reduced in flow, the remaining fans 110a-b and 110e-f are allowed to run for a period of time, such as a time of about 3-5 days. After such period of time, the ozone conduit 124 is removed from the J-vent 106c and attached to a different J-vent 106d.

After attaching the ozone conduit 124 to the J-vent 106d, all of the fans 110 are turned on to draw or suck the ozone pumped into the headspace 116 into the grain 112. As the fans 110 are running and the ozone is pumped through the J-vent 106d, the ozone begins traveling through the grain 112 and exerting its treatment effect on the grain 112. After a period of time, the air exiting the grain bin 100 through the fans 110 is monitored using an ozone detecting device or detected by a person. Once ozone is detected as exiting the grain bin 100 through fan 110d or fan 110c (such as a time of about 18-24 hours), the fans 110d or 110c (associated with the aeration panels 109a or 109b located in closest proximity to the J-vent 106d operatively connected to the ozone generator 120) is turned off or has its air flow reduced, such that the air begins to exit the grain bin 100 more through the other fans 110.

Once fan 110d or 110c is turned off, then the other fan 110d or 110c is allowed to run until ozone is detected as exiting the grain bin 100 through that fan 110d or 110c (such as a time of about 18-24 hours). Once the second fan 110d or 110c is turned off, the remaining fans 110a-b and 110e-f are allowed to run for a period of time, such as a time of about 3-5 days. After such period of time, the ozone conduit 124 is removed from the J-vent 106d and attached to a center vent 115 of the grain bin 100.

After attaching the ozone conduit 124 to the center vent 115, all of the fans 110 are turned on to draw or suck the ozone pumped into the headspace 116 into the grain 112. As the fans 110 are running and the ozone is pumped through the center vent 115, the ozone begins traveling through the grain 112 and exerting its treatment effect on the grain 112. After a period of time, the air exiting the grain bin 100 through the fans 110 is monitored using an ozone detecting device or detected by a person. Once ozone is detected as exiting the grain bin 100 through one of the fans 110 (such as a time of about 18-24 hours), the fan 110 through which the ozone is first detected is turned off or has its air flow reduced, such that the air begins to exit the grain bin 100 more through the other fans 110.

Once one of the fans 110 are turned off, the rest of the fans 110 are allowed to run until ozone is detected as exiting the grain bin 100 through a second fan 110 (such as a time of about 18-24 hours). Once the second fan 110 is turned off, the remaining fans 110 are allowed to run for a period of time, such as a time of about 3-5 days. In an additional aspect, in this last treatment segment where the ozone is introduced into the center vent 115, if any of the fans 110 have not had ozone detected during the various treatments, such fans 110 are allowed to run and all of the fans 110 which have had ozone detected are shut off or reduced in flow, such that the fans 110 which have not had ozone detected are able to pull the ozone through grain 112 which may not have been treated. After such period of time, the ozone conduit 124 is removed from the center vent 115 and the ozone treatment of this grain bin 100 may be completed. A complete treatment of a grain bin 100 of this size takes place within a time frame of about 15-25 days, which may average about 20 days. After completion of the ozone treatment, the exhaust fans 104 are returned to their normal working condition and the grain 112 may be stored longer, mixed with other grain, or shipped to another location.

In another aspect, the grain 112 within the grain bin 100 may be turned over or partially turned over in order to treat the grain 112 in the grain bin 100 that has been turned over or partially turned over. Referring to FIG. 2A, turning over of the grain 112 is effectuated by removing a portion 117 of the grain 112 located closest to the floor 108 and placing such removed grain on a portion 119 of the grain 112 located closed to the headspace 116. By turning over the grain 112, the ozone treatment may be able to more effectively treat portions of the grain that were not as effectively treated as other portions of the grain. It should be noted that in treatment of a one million bushel bins as described herein, the grain 112 may be turned over after treating the grain 112 through J-vent 106b and before treating the grain 112 through J-vent 106c. Such turning over of the grain may be effectuated using a device for removing a lowermost portion of the grain in the grain storage container currently known or later invented such as a sweep auger, a tapered sweep auger, a bin sweep, a ring drive reclaimer, a center drive reclaimer, a conical hopper reclaimer, or other known device. The device for removing the lowermost portion of the grain in the grain storage container may be coupled with a grain spreader or other device for placing the grain in the grain storage container such as an auger, a motorized bin level, a gravity flow spreader, a cone spreader, or other known device for placing grain in a grain storage container.

It has been found that by treating grain in the manner set forth herein, grain can be effectively treated to lower toxins (including but not limited to aflatoxin and/or vomatoxin) amounts, lower microbial counts in the grain, kill insects present in the grain, and/or remove or reduce odors to make the grain more suitable for use.

The embodiments and aspects described herein may be used to treat grain located in a grain bin or grain located in a grain pile that has been placed outside and covered with a tarp.

While this invention has been particularly shown and described with references to exemplary embodiments thereof, it will be understood by those skilled in the art that various changes in form and details may be made therein without departing from the scope of the invention encompassed by the appended claims.

## Claims

1. A method of treating grain with ozone, the method comprising:
introducing ozone in a headspace above the grain in a first location;
drawing the ozone into the grain with at least two fans until the ozone is detected in air drawn through a first fan of the at least two fans;
once the ozone is detected in the air drawn through the first fan, reducing a flow of air generated by the first fan; and
continuing to draw the ozone into the grain with the remaining fans of the at least two fans; wherein, after a first period of time of introducing the ozone in the first location, further comprises:
introducing the ozone in the headspace above the grain in a second location;
drawing the ozone into the grain with the at least two fans until the ozone is detected in air drawn through the first fan of the at least two fans;
once the ozone is detected in the air drawn through the first fan, reducing a flow of air generated by the first fan; and
continuing to draw the ozone into the grain with the remaining fans of the at least two fans.

2. The method according to claim 1, further comprising discontinuing to introduce the ozone in the first location before introducing the ozone in the second location.

3. The method according to claim 1, after a second period of time of introducing the ozone in the second location, further comprising:
introducing the ozone in the headspace above the grain in a third location;
drawing the ozone into the grain with the at least two fans until the ozone is detected in air drawn through the first fan of the at least two fans;
once the ozone is detected in the air drawn through the first fan, reducing a flow of air generated by the first fan; and
continuing to draw the ozone into the grain with the remaining fans of the at least two fans.

4. The method according to claim 3, further comprising discontinuing to introduce the ozone in the second location before introducing the ozone in the third location.

5. The method according to claim 1, further comprising:
removing a lowermost portion of the grain ; and
placing the removed, lowermost portion of the grain on top of the grain.

## Patentansprüche

1. Verfahren zur Behandlung von Getreide mit Ozon, wobei das Verfahren umfasst:
Einführen von Ozon in einen Kopfraum oberhalb des Getreides an einem ersten Ort;
Saugen des Ozons in das Getreide mit wenigstens zwei Ventilatoren, bis das Ozon in durch einen ersten Ventilator von den wenigstens zwei Ventilatoren gesaugte Luft nachgewiesen wird;
sobald das Ozon in der durch den ersten Ventilator gesaugten Luft nachgewiesen wird, Reduzieren des durch den ersten Ventilator erzeugten Luftstroms; und
Weitersaugen des Ozons in das Getreide mit den übrigen Ventilatoren der wenigstens zwei Ventilatoren;
wobei das Verfahren nach einer ersten Zeitspanne des Einführens des Ozons an dem ersten Ort weiterhin umfasst:
Einführen des Ozons in den Kopfraum oberhalb des Getreides an einem zweiten Ort;
Saugen des Ozons in das Getreide mit den wenigstens zwei Ventilatoren, bis das Ozon in durch einen ersten Ventilator von den wenigstens zwei Ventilatoren gesaugte Luft nachgewiesen wird;
sobald das Ozon in der durch den ersten Ventilator gesaugten Luft nachgewiesen wird, Reduzieren des durch den ersten Ventilator erzeugten Luftstroms; und
Weitersaugen des Ozons in das Getreide mit den übrigen Ventilatoren der wenigstens zwei Ventilatoren.

2. Verfahren gemäß Anspruch 1, weiterhin umfassend das Unterbrechen der Einführung des Ozons an dem ersten Ort, bevor man das Ozon an dem zweiten Ort einführt.

3. Verfahren gemäß Anspruch 1, wobei das Verfahren nach einer zweiten Zeitspanne des Einführens des Ozons an dem zweiten Ort weiterhin umfasst:
Einführen des Ozons in den Kopfraum oberhalb des Getreides an einem dritten Ort;
Saugen des Ozons in das Getreide mit den wenigstens zwei Ventilatoren, bis das Ozon in durch einen ersten Ventilator von den wenigstens zwei Ventilatoren gesaugte Luft nachgewiesen wird;
sobald das Ozon in der durch den ersten Ventilator gesaugten Luft nachgewiesen wird, Reduzieren des durch den ersten Ventilator erzeugten Luftstroms; und
Weitersaugen des Ozons in das Getreide mit den übrigen Ventilatoren der wenigstens zwei Ventilatoren.

4. Verfahren gemäß Anspruch 3, weiterhin umfassend das Unterbrechen der Einführung des Ozons an dem zweiten Ort, bevor man das Ozon an dem dritten Ort einführt.

5. Verfahren gemäß Anspruch 1, weiterhin umfassend:
Entnehmen des untersten Teils des Getreides; und
Platzieren des entnommenen untersten Teils des Getreides auf dem Getreide.

## Revendications

1. Procédé de traitement de grains avec de l'ozone, le procédé comprenant les étapes consistant à :
introduire de l'ozone dans un espace libre au-dessus des grains dans un premier emplacement ;
attirer l'ozone dans les grains à l'aide d'au moins deux ventilateurs jusqu'à ce que l'ozone soit détecté dans l'air attiré à travers un premier ventilateur des au moins deux ventilateurs ;
une fois que l'ozone est détecté dans l'air attiré à travers le premier ventilateur, réduire un flux d'air généré par le premier ventilateur ; et
continuer d'attirer l'ozone dans les grains avec les ventilateurs restants parmi les au moins deux ventilateurs ; dans lequel, après une première période d'introduction de l'ozone dans le premier emplacement, il comprend en outre les étapes consistant à :
introduire l'ozone dans l'espace libre au-dessus des grains dans un deuxième emplacement ;
attirer l'ozone dans les grains à l'aide des au moins deux ventilateurs jusqu'à ce que l'ozone soit détecté dans l'air attiré à travers le premier ventilateur des au moins deux ventilateurs ;
une fois que l'ozone est détecté dans l'air attiré à travers le premier ventilateur, réduire un flux d'air généré par le premier ventilateur ; et
continuer d'attirer l'ozone dans les grains à l'aide des ventilateurs restants parmi les au moins deux ventilateurs.

2. Procédé selon la revendication 1, comprenant en outre l'interruption de l'introduction de l'ozone dans le premier emplacement avant l'introduction de l'ozone dans le deuxième emplacement.

3. Procédé selon la revendication 1, après une seconde période d'introduction de l'ozone dans le deuxième emplacement, comprenant en outre les étapes consistant à :
introduire l'ozone dans l'espace libre au-dessus des grains dans un troisième emplacement ;
attirer l'ozone dans les grains à l'aide des au moins deux ventilateurs jusqu'à ce que l'ozone soit détecté dans l'air attiré à travers le premier ventilateur des au moins deux ventilateurs ;
une fois que l'ozone est détecté dans l'air attiré à travers le premier ventilateur, réduire un flux d'air généré par le premier ventilateur ; et
continuer à attirer l'ozone dans les grains à l'aide des ventilateurs restants parmi les au moins deux ventilateurs.

4. Procédé selon la revendication 3, comprenant en outre l'interruption de l'introduction de l'ozone dans le deuxième emplacement avant l'introduction de l'ozone dans le troisième emplacement.

5. Procédé selon la revendication 1, comprenant en outre les étapes consistant à :
enlever une partie la plus inférieure des grains ; et
placer la partie enlevée la plus inférieure des grains sur le dessus des grains.
